# EUROPÄISCHE PATENTSCHRIFT

(11) **EP 4 245 501 B1**
(45) Veröffentlichungstag und Bekanntmachung des Hinweises auf die Patenterteilung: **11.12.2024**
(21) Anmeldenummer: 23154746.4
(22) Anmeldetag: 02.02.2023
(51) Int. Cl.: B29C 45/16, B29C 45/00

(54) **VERFAHREN ZUM HERSTELLEN EINER REINIGUNGSWALZE SOWIE REINIGUNGSWALZE UND STAUBSAUGERDÜSE**
METHOD FOR PRODUCING A CLEANING ROLLER, CLEANING ROLLER AND VACUUM CLEANER NOZZLE
PROCÉDÉ DE FABRICATION D'UN ROULEAU DE NETTOYAGE, ROULEAU DE NETTOYAGE ET BUSE D'ASPIRATEUR

(30) Priorität: 15.03.2022 DE 102022105964
(43) Veröffentlichungstag der Anmeldung: 20.09.2023
(73) Patentinhaber: Wessel-Werk GmbH, 51580 Reichshof-Wildbergerhütte (DE)
(72) Erfinder: Klapper, Christian, 51580 Reichshof (DE); Schauf-Ising, Raimund, 57223 Kreuztal-Oberhees (DE)
(74) Vertreter: Andrejewski - Honke Patent- und Rechtsanwälte Partnerschaft mbB

(56) Entgegenhaltungen:
- WO-A1-2009/149722
- WO-A1-2013/093064
- WO-A1-2017/001975
- DE-A1- 102015 102 610
- DE-A1- 19 961 008
- DE-C1- 3 417 384
- FR-A- 1 193 164
- "Handbuch Spritzgießen", 1 January 2004, HANSER VERLAG, ISBN: 978-3-44-622966-2, article FRIEDRICH JOHANNABER ET AL: "Mehrschichtspritzgiessen zur Beschleunigung des Abkühlvorgangs", XP055057117

## Beschreibung

Die Erfindung betrifft ein Verfahren zum Herstellen einer Reinigungswalze, insbesondere für ein Bodenreinigungsgerät. Die Reinigungswalze umfasst einen Walzenkörper und eine an dem Walzenkörper angeordnete Reinigungsanordnung.

Reinigungswalzen sind als Reinigungselemente bekannt, welche durch eine Rotationsbewegung relativ zu einer zu reinigenden Oberfläche bewegt werden. Dazu sind Reinigungswalzen in der Regel mit einem Antrieb gekoppelt, welcher eine kontinuierliche, oszillierende und/oder intermittierende Drehbewegung ermöglicht.

Die Erfindung geht aus von einer Reinigungswalze, welche funktionell in einen Walzenkörper und eine auf dem Walzenkörper angeordnete Reinigungsanordnung geteilt ist. Der Walzenkörper ist für den strukturellen Zusammenhalt der Reinigungswalze und deren Formgebung verantwortlich, während die Reinigungsanordnung für den Kontakt mit einer zu reinigenden Oberfläche vorgesehen ist und dabei die eigentliche Reinigungswirkung hervorruft.

Die Reinigungsanordnung kann insbesondere textile Reinigungselemente wie beispielsweise Tücher, Gewebe und/oder Vliesstoffe umfassen. Weiterhin sind auch flüssigkeits-haltende Gebilde wie Schwämme oder Schaumstoffe bzw. flüssigkeits-ableitende Elemente wie z.B. Dichtlippen bekannt. Eine weitere häufige Ausgestaltung umfasst Gebilde mit vorstehenden freien Faserenden oder Schlaufen wie z.B. Plüsch- oder Borstenstreifen. Die genannten und weitere Reinigungselemente können im Rahmen einer Reinigungsanordnung auch miteinander kombiniert werden.

Eine häufige Anwendung finden Reinigungswalzen bei Bodenreinigungsgeräten wie z.B. Staubsaugerdüsen, Bürstvorsatzgeräten oder Staubsaugerrobotern. Dabei haben sie die Aufgabe - insbesondere bei textilen Bodenbelägen - anhaftende und/oder eingebettete Schmutzpartikel mechanisch zu lösen, sodass diese durch einen Saugluftstrom und/oder durch Einwirkung einer Reinigungsflüssigkeit entfernt werden können.

Der allgemeine Aufbau einer Reinigungswalze mit einem aufgesetzten Antriebselement ist aus DE 199 61 008 A1 bekannt.

Aus US 2004/0 010 875 A1 ist ein Verfahren zur Herstellung einer Reinigungswalze bekannt, bei dem eine metallische Achse mit einem Kunststoff umspritzt wird. DE 10 2015 102 610 A1 zeigt eine Bürstenwalze mit einem Walzenkörper, welcher mit einer polymeren Schutzschicht überzogen ist. In WO 2009/149 722 A1 zeigt eine Reinigungswalze mit mehreren Kunststoffschichten.

Das strukturell tragende Bauteil des Walzenkörpers wird aus Kostengründen üblicherweise aus Kunststoff hergestellt. Hierzu sind Kunststoffspritzgussteile am Weitesten verbreitet. Dabei wird der Walzenkörper in einer Hohlform abgebildet, welche anschließend mit einer Kunststoffschmelze ausgefüllt wird.

Aufgrund der großen mechanischen Belastungen bei einer Reinigungswalze müssen die Walzenkörper eine gewisse Größe und Masse aufweisen. Diese erschwert jedoch die Herstellung im Kunststoffspritzgussverfahren. Aufgrund der großen Polymermasse können bei einer zu schnellen und/oder zu ungleichmäßigen Abkühlung des Polymermaterials Spannungen und/oder Verformungen des Kunststoffteils auftreten. Diese beeinträchtigen nicht nur das äußere Erscheinungsbild, sondern können auch die Funktion der Reinigungswalze stören.

Neben einer Beeinträchtigung der strukturellen Integrität durch intrinsische Spannungen oder gegebenenfalls Spannungsrisse kann eine derartig verformte Reinigungswalze auch im Betrieb von Nachteil sein. Die Unregelmäßigkeiten können zu einer ungleichmäßigen Gewichtsverteilung an der Reinigungswalze führen, welche bei einer Drehbewegung in einer Unwucht resultiert. Diese wiederum führt zu einer ungleichmäßigen Belastung der Reinigungswalze, deren Lager und Antrieb. Auch rufen Unwuchten während der Benutzung störende Vibrationen hervor, welche einen Benutzer irritieren können.

Um bei großvolumigen Spritzgussteilen einen temperaturbedingten Verzug zu vermeiden, ist eine besonders gleichmäßige - d.h. langsame - Abkühlung erforderlich. Dies resultiert jedoch in längeren Taktzyklen, welche die Herstellung zunehmend unrentabel machen können.

Vor diesem Hintergrund liegt der Erfindung die Aufgabe zugrunde, ein verbessertes Herstellungsverfahren für eine Reinigungswalze anzugeben, welches eine effiziente Herstellung maßhaltiger Reinigungswalzen ermöglicht. Gegenstand der Erfindung und Lösung dieser Aufgabe ist ein Verfahren nach Anspruch 1. Bevorzugte Ausgestaltungen sind in den abhängigen Unteransprüchen angegeben. Außerdem betrifft die Erfindung eine Reinigungswalze nach Anspruch 18 sowie Staubsaugerdüse nach Anspruch 19.

Ausgehend von dem gattungsgemäßen Verfahren ist erfindungsgemäß vorgesehen, dass der Walzenkörper einen Kern und einen um den Kern angeordneten Mantel aufweist und dass der Walzenkörper in einem mehrstufigen Spritzgussverfahren hergestellt wird. Dabei wird der Kern in einer ersten Spritzgussform mit einem ersten Polymermaterial hergestellt und der Mantel durch zumindest ein nachfolgendes Umspritzen des Kerns in einer zweiten Spritzgussform mit einem zweiten Polymermaterial hergestellt. Durch die Aufteilung des Spritzgießens in zumindest zwei separate Vorgänge, kann die verwendete Masse an Kunststoffschmelze jeweils reduziert werden. Dadurch kann das Erstarren/Abkühlen jeweils schneller erfolgen, ohne dass zu große Temperaturdifferenzen innerhalb des Bauteils entstehen.

Umspritzen bezeichnet dabei einen Spritzguss-Vorgang, bei dem das umspritzte Bauteil, z.B. der Kern, in eine Spritzgussform, insbesondere die zweite Spritzgussform, eingelegt, dort mit einer Schmelze, insbesondere des zweiten Polymermaterials, umhüllt wird und diese nachfolgend erstarrt. Dabei füllt die Schmelze vorzugsweise den zwischen dem Bauteil und der Spitzgussform gebildeten Hohlraum vollständig aus.

Der in dem ersten Spritzguss-Schritt hergestellte Kern kann insbesondere aktiv gekühlt werden, um eine möglichst schnelle Erstarrung und Temperaturangleichung zu erzielen. Die aktive Kühlung kann innerhalb der Spritzgussform und/oder durch nachträgliche Beaufschlagung mit einem Kühlmittel - insbesondere Kühlluft - erreicht werden. Selbst für den Fall, dass bei einer derartigen aktiven Abkühlung Verformungen, Schwindungen und/oder Risse auftreten, lassen sich diese bei der Herstellung des Mantels in dem zweiten Spritzguss-Schritt ausgleichen bzw. auffüllen. Der nach dem erfindungsgemäßen Verfahren hergestellte Walzenkörper kann trotz des Zeitvorteils eine Spritzgussqualität und Maßhaltigkeit erreichen, welche bei derartig großen Kunststoff-Bauteilen nur mit einer aufwendigen Temperierung während des Abkühlvorgangs zu erreichen ist.

Die erste Spritzgussform und die zweite Spritzgussform - sowie gegebenenfalls weitere Spritzgussformen - können in einem einzigen Spritzgusswerkzeug durch verschiedene unterschiedlich sogenannte "Formnester" ausgebildet sein. Dadurch kann besonders einfach eine gemeinsame Temperierung und Beschickung mit Spritzgussmaterial realisiert werden. Während eines Taktzyklus' können dann sämtliche Spritzguss-Stufen in demselben Spritzgusswerkzeug gleichzeitig durchgeführt werden.

Im Rahmen des erfindungsgemäßen Verfahrens ist bevorzugt vorgesehen, dass auch der Mantel mehrstufig mit zumindest einem weiteren Umspritzen in einer weiteren Spritzgussform mit einem weiteren Polymermaterial durchgeführt wird. Der Mantel weist dann zumindest einen - in dem zweiten Spritzguss-Schritt hergestellten - Innenmantel sowie einen in einem weiteren Spritzguss-Schritt hergestellten Außenmantel auf.

Vorzugsweise ist genau ein weiterer Spritzguss-Schritt vorgesehen, sodass die Herstellung des Walzenkörpers insgesamt drei Spritzguss-Schritte - Kern, Innenmantel und Außenmantel - umfasst. Zumindest Innenmantel und Kern sowie Außenmantel und Kern schließen dabei unmittelbar, flächig und stoffschlüssig aneinander an.

Vorzugsweise ist vorgesehen, dass bei einem oder mehreren Spritzguss-Schritten - außer bei der äußersten Schicht des Mantels - eine aktive Kühlung vorgesehen ist. Die äußerste Schicht kann dabei zur Oberflächenveredelung und zum Ausgleich etwaiger Ungenauigkeiten der - durch den Kern und darunter liegende Schichten des Mantels gebildete - Unterlage verwendet werden.

Alternativ oder zusätzlich kann die Außenschicht in mehreren, alternativ ausgewählten zweiten bzw. weiteren Spritzgussformen hergestellt werden. Durch die alternative Auswahl können dabei Walzenkörper unterschiedlicher (Außen-)Geometrie angefertigt werden. Diese Walzenkörper können insbesondere an unterschiedliche Reinigungsanordnungen angepasst sein. Hierbei kann es sich beispielsweise um unterschiedliche Besteckungen einer Borstenwalze handeln. Als weitere Möglichkeit können hierdurch Anpassungen, beispielsweise zwischen einer Nassreinigungswalze (z.B. mit Schwammelementen und Wischleisten) und einer Trockenreinigungswalze (z.B. mit Plüsch- und/oder Borstenstreifen) ermöglicht werden.

Gemäß einer bevorzugten Ausgestaltung stimmt die Zusammensetzung des ersten Polymermaterials zu zumindest 95 Gew.-% mit der Zusammensetzung des zweiten Polymermaterials überein. Bei dem erfindungsgemäßen Verfahren geht es darum, den Walzenkörper mehrteilig bzw. mehrlagig herzustellen, um dabei temperatur- bzw. abkühlungsbedingte Verzüge und/oder Schwindrisse auszugleichen. Zu dieser Zielsetzung ist es hilfreich, dass das erste Polymermaterial besonders ähnliche physikalische und chemische Eigenschaften aufweisen. Idealerweise ist das Endprodukt von einem - mit höherem Aufwand und längerer Prozessdauer - hergestellten Bauteil in einem einzigen Spritzguss-Schritt äußerlich nicht zu unterscheiden. Die chemische Ähnlichkeit der beiden Polymermaterialien ist dabei insbesondere für einen guten Zusammenhalt zwischen dem Kern und dem Mantel zuträglich.

Gemäß einer bevorzugten Ausgestaltung der Erfindung weist das erste Polymermaterial und/oder das zweite Polymermaterial zumindest 50 Gew.-% eines Polymers, ausgewählt aus der Gruppe Polystyrol (PS), AcrylnitrilButadien-Styrol (ABS) und Polypropylen (PP), auf.

Besonders bevorzugt sind das erste und das zweite Polymermaterial identisch - d.h., mit der gleichen Kunststoffzusammensetzung - ausgebildet. Zusätzlich zu den Vorteilen für das Produkt kann hierdurch auch der Aufbau der zur Durchführung des erfindungsgemäßen Verfahrens verwendeten Anlage vereinfacht werden. Beispielsweise können die Zuführung und/oder die Heiz- und Extrudereinheit für das erste Polymermaterial und das zweite Polymermaterial zusammen ausgeführt werden. Besonders bevorzugt ist lediglich eine einzige Extrudereinheit ausgebildet, welche wahlweise bzw. gleichzeitig Kunststoffschmelze der ersten Spritzgussform und/oder der zweiten Spritzgussform zuführen kann.

Gemäß einem weiteren bevorzugten Aspekt der Erfindung weisen das erste Polymermaterial das zweite Polymermaterial dieselbe Dichte auf. Dies kann trivialerweise bei identischen Polymermaterialien oder alternativ auch bei zueinander verschiedenen Polymerblends verwirklicht sein. Durch die Verwendung von Polymermaterialien derselben Dichte ist die Gewichtsverteilung innerhalb des Walzenkörpers unabhängig von der Form des vom Mantel umspritzten Kerns. Selbst bei einer starken Verformung des Kerns im oder nach dem ersten Spritzguss-Schritt ergeben sich keine Nachteile bezüglich der Position des Schwerpunktes und der Trägheitsmomente der Reinigungswalze. Produktionstoleranzen bei der Herstellung des Kerns können daher zu keinen unbeabsichtigten Unwuchten der Reinigungswalze führen.

Vorzugsweise durchläuft der Kern vor dem Umspritzen mit dem zweiten Polymermaterial - d.h. zwischen dem ersten Spritzguss-Schritt und dem zweiten Spritzguss-Schritt - eine Abkühlphase. Dabei wird die Temperatur des vorgeformten Kerns weiter abgesenkt, so dass dieser beim Umspritzen mit dem zweiten Polymermaterial als zusätzliche Temperatursenke dienen kann, um das zweite Polymermaterial mit abzukühlen.

Üblicherweise haben Spritzgussteile beim Verlassen der Spritzgussform eine (Außen-)Temperatur von ca. 200 °C. Gemäß einer besonders bevorzugten Variante ist die Abkühlphase so bemessen und ausgestaltet, dass der Kern auf eine (Oberflächen-)Temperatur von höchstens 160 °C, d.h. um zumindest 40 °C, abkühlt. Besonders vorteilhaft ist eine Oberflächen-Außentemperatur des Kerns vor dem zweiten Spritzguss-Schritt zwischen 145 °C und 155 °C.

Gemäß einer bevorzugten Ausgestaltung findet die Abkühlphase innerhalb der ersten Spritzgussform statt. Diese kann dazu gegebenenfalls entsprechend temperiert werden.

Gemäß einer weiteren bevorzugten Ausgestaltung erfolgt die Abkühlphase zumindest teilweise außerhalb der Spritzgussform. Hierzu kann der Kern zusätzlich mit einem Kühlmedium - beispielsweise Kühlluft - beaufschlagt werden. Hierbei ist von Vorteil, dass die erste Spritzgussform nicht gesondert temperiert werden muss, um die Abkühlung zu erzielen. Auch kann durch die Steuerung eines Stroms am Kühlmedium zusätzlich die Abkühlung beschleunigt werden. Etwaige negative Nebeneffekte einer (zu) schnellen Abkühlung lassen sich anschließend durch das mehrstufige Spritzgussverfahren problemlos ausgleichen. Weiterhin ist von Vorteil, dass die erste Spritzgussform nach dem Entnehmen des Kerns zur Formung eines weiteren Kerns verwendet werden kann. Hierdurch lässt sich der Durchsatz einer Produktionsstraße erhöhen.

Ein Aspekt der Erfindung besteht darin, dass die Abkühlung des Mantels im Rahmen des erfindungsgemäßen Verfahrens beschleunigt werden kann, da der bereits ausgehärtete - und gegebenenfalls zusätzlich abgekühlte - Kern als innenliegende Wärmesenke das Abkühlen des Mantels beschleunigen kann. Um diesen Aspekt zu optimieren ist vorzugsweise vorgesehen, dass das erste Polymermaterial (des Kerns) und das zweite Polymermaterial (des Mantels) in einem Massenverhältnis zwischen 1 : 2 und 2 : 1 stehen. Als besonders bevorzugt hat sich ein Massenverhältnis von 1 : 1 - bzw. von 1 : 1 : 1 bei einem dreistufigen Verfahren - herausgestellt.

Der Walzenkörper ist gemäß einer bevorzugten Ausgestaltung um eine Drehachse herum ausgebildet, wobei er in Richtung der Drehachse (Axialrichtung) eine größere, insbesondere fünffach größere, Längserstreckung aufweist als in radialer Richtung senkrecht zu der Drehachse (Radialerstreckung). Die Reinigungswalze bzw. der Walzenkörper sind dazu eingerichtet und vorgesehen, um die Drehachse in Rotation versetzt zu werden. Dabei sind die Reinigungswalze als Ganzes und der Walzenkörper im Besonderen derart ausgebildet, dass die Drehachse jeweils durch ihren Schwerpunkt hindurch verläuft. Somit werden bei einer Drehbewegung zumindest Unwuchten erster Ordnung vermieden.

Vorzugsweise weist der Walzenkörper einen maximalen Durchmesser zwischen 1,5 cm und 4 cm auf. Bei einer solchen Erstreckung ist eine maßhaltige Herstellung in einem einstufigen Spritzgussverfahren als Massivteil nur sehr schwer darstellbar. Vorzugsweise weist der Walzenkörper in der Axialrichtung gemessene Länge zwischen 20 cm und 35 cm auf.

Gemäß einer bevorzugten Variante des Verfahrens werden in den Mantel Reinigungselemente der Reinigungsanordnung, insbesondere Borsten oder Borstenbüschel formschlüssig eingegossen. Dadurch werden die Reinigungselemente unverlierbar an dem Walzenkörper gehalten. Eine spätere separate Befestigung, etwa durch Verkleben oder Verschweißen entfällt.

Dazu ist insbesondere vorgesehen, dass die Reinigungselemente in der zweiten und/oder einer folgenden Spritzgussform eingespannt werden und in einem Arbeitsschritt gleichzeitig mit dem eingelegten Kern - und gegebenenfalls einem Zwischenmantel - umspritzt werden.

Vorzugsweise weist der Kern eine Außenseite und zumindest eine an der Außenseite ausgebildete Formschlussanordnung auf. In diese greift der Mantel formschlüssig ein. Die Formschlussanordnung kann insbesondere Vorsprünge und/oder Ausnehmungen aufweisen. Durch die formschlüssige Verbindung zwischen Mantel und Kern wird sichergestellt, dass diese auch dann unverlierbar und mechanisch miteinander starr gekoppelt sind, selbst wenn zwischen dem ersten Polymermaterial und dem zweiten Polymermaterial keine stoffschlüssige Verbindung hergestellt werden kann.

Zweckmäßigerweise wird in die erste Spritzgussform vor der Herstellung des Kerns zumindest eine Handhabungshilfe eingelegt, welche nach der Herstellung des Mantels zerstörungsfrei aus dem Walzenkörper entnehmbar ist. Hierbei kann es sich insbesondere um einen metallischen Stab handeln, welcher von dem ersten Polymermaterial in der ersten Spritzgussform mit umspritzt wird. Nach dem Öffnen der ersten Spritzgussform kann durch die Handhabungshilfe aus der Form entnommen werden. Anschließend vereinfacht die Handhabungshilfe die korrekte (mittige) Anordnung innerhalb der zweiten Spritzgussform. Dadurch kann ein gleichmäßiges umlaufendes Umspritzen des Kerns mit dem zweiten Polymermaterial gewährleistet werden.

Nach dem zweiten Spritzguss-Schritt (und gegebenenfalls weiteren Spritzguss-Schritten) kann die Handhabungshilfe zerstörungsfrei aus dem Walzenkörper entfernt - insbesondere herausgezogen werden. Sie kann dann bei der Herstellung eines folgenden Walzenkörpers wiederverwendet werden. Nach dem Entfernen der Handhabungshilfe verbleibt ein Hohlraum in dem Walzenkörper, welcher besonders bevorzugt in einem nachfolgenden Schritt mit einem Polymermaterial aufgefüllt wird. Hierzu kann insbesondere die Spritzgussform des letzten Spritzguss-Schrittes des Mantels verwendet werden, wobei gegebenenfalls Öffnungen in der Spritzgussform für die Handhabungshilfe abzudecken sind.

Vorzugsweise wird im Rahmen des erfindungsgemäßen Verfahrens eine Funktionseinheit, beispielsweise ein Wälzlager, verliersicher eingegossen. Dazu ist insbesondere vorgesehen, dass an dem Kern eine Aufnahme ausgebildet ist, in die die Funktionseinheit nach dem ersten Spritzguss-Schritt eingesetzt werden kann. Durch das Umspritzen des Kerns mit dem zweiten Polymermaterial wird die Funktionseinheit anschließend derart durch Formschluss fixiert, dass ein Entnehmen nicht mehr möglich ist.

Im Rahmen des erfindungsgemäßen Verfahrens ist vorgesehen, dass der Kern durch das zweite Polymermaterial umspritzt wird. Nach dem zweiten Spritzguss-Schritt umgibt das erstarrte zweite Polymermaterial den Kern umlaufend und bevorzugt, jedoch nicht notwendigerweise vollständig. Gemäß einer besonders bevorzugten Ausgestaltung kann der Kern auch teilweise durch den Mantel ausgekleidet werden. Beispielsweise bildet der Kern zumindest eine in der Axialrichtung zugängliche Aufnahme aus, welche von dem Mantel ausgekleidet wird. Hierbei kann es sich beispielsweise um eine Aufnahme für einen axialen Führungsdorn handeln, welcher im bestimmungsgemäßen Einsatz der Reinigungswalze in das axiale Ende der Reinigungswalze eingeführt wird. Ganz besonders bevorzugt ist innerhalb der Aufnahme zumindest ein Wälzlager angeordnet, welches durch den die Aufnahme auskleidenden Teil des Mantels formschlüssig darin gehalten wird.

Zweckmäßigerweise ist auf den Kern zumindest ein Antriebselement, insbesondere ein Zahnrad aufgesetzt. Dieses kann insbesondere nach dem ersten Spritzguss-Schritt aufgesetzt werden, wonach das Antriebselement anschließend - in dem zweiten Spritzguss-Schritt - durch den Mantel verliersicher in dem Walzenkörper gehalten wird. Dies ist insbesondere zweckmäßig bei Antriebselementen, welche beabstandet zu den axialen Enden des Walzenkörpers angeordnet sind.

Der Kern weist zumindest ein Halteelement zur drehstarren Kopplung mit dem Antriebselement auf. Bei diesem Halteelement handelt es sich erfindungsgemäß um ein materialfremdes Halteteil, wie beispielsweise eine Metallklammer oder Metallplatte. Durch das Halteelement wird der Übertrag vom Drehmoment auf den Kern - und damit den gesamten Walzenkörper - verbessert.

Die Erfindung betrifft auch eine Reinigungswalze, insbesondere für eine Staubsaugerbodendüse erhältlich nach dem zuvor beschriebenen Herstellungsverfahren. Die Reinigungswalze umfasst einen Walzenkörper und eine an dem Walzenkörper angeordnete Reinigungsanordnung. Erfindungsgemäß weist der Walzenkörper einen Kern aus einem ersten Polymermaterial und einen den Kern unmittelbar umgebenden Mantel mit einem zweiten, insbesondere identischen Polymermaterial auf. Durch den zumindest zweischaligen Aufbau weist die erfindungsgemäße Reinigungswalze eine größere Stabilität und Maßhaltigkeit auf. Sie ist daher besonders gut für starke Beanspruchung und lange Einsatzdauern geeignet.

Ein weiterer Aspekt der Erfindung betrifft eine Staubsaugerbodendüse mit einer solchen Reinigungswalze. Die Staubsaugerdüse weist ein Gehäuse mit einem unterseitig angeordneten Saugmund und einer innerhalb des Gehäuses angeordneten und an den Saugmund anschließenden Bürstenkammer auf. Die erfindungsgemäße Reinigungswalze ist innerhalb der Bürstenkammer angeordnet und mit einem Antrieb gekoppelt. Dieser dient dazu, die Reinigungswalze in eine Drehbewegung zu versetzen. Der Antrieb kann insbesondere durch einen Elektromotor oder eine Luftstromturbine dargestellt sein. Die hohe Stabilität und Maßhaltigkeit der Reinigungswalze infolge des erfindungsgemäßen Herstellungsverfahrens ermöglicht hohe Drehzahlen und eine gute Reinigungswirkung.

Nachfolgend wird die Erfindung anhand von lediglich ein Ausführungsbeispiel darstellenden Figuren erläutert. Es zeigen dabei schematisch:
- Fig. 1A: einen Längsschnitt durch den Kern und die erste Spritzgussform,
- Fig. 1B: eine Seitenansicht des in dem ersten Spritzguss-Schritt hergestellten Kerns,
- Fig. 2A: einen Längsschnitt durch die erfindungsgemäße Reinigungswalze in der zweiten Spritzgussform und
- Fig. 2B: eine Seitenansicht der erfindungsgemäßen Reinigungswalze.

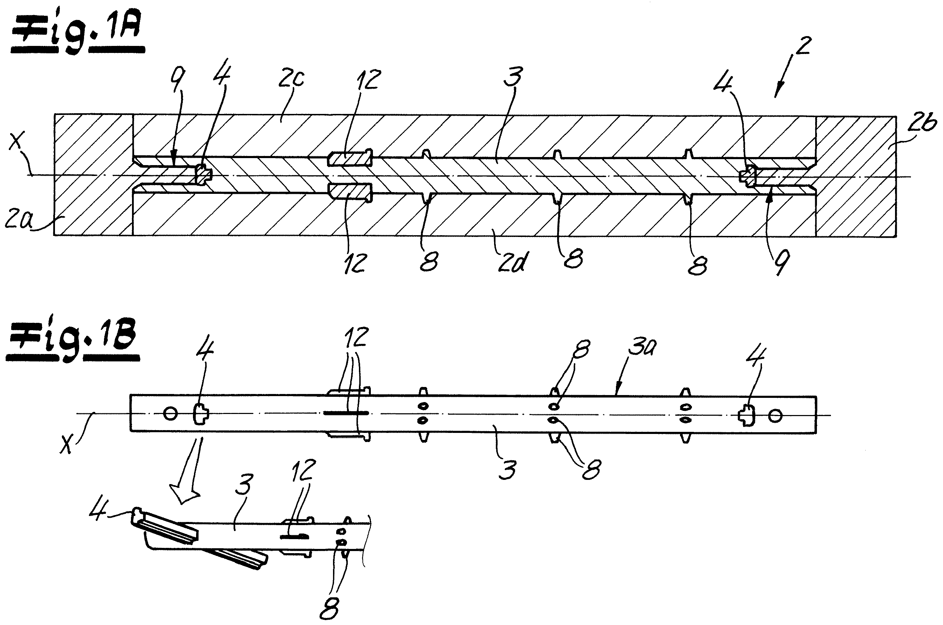

Gemäß dem erfindungsgemäßen Verfahren wird ein Walzenkörper 1 für eine Reinigungswalze in einem mehrstufigen Spritzgussverfahren hergestellt. Wie der Fig. 1A zu entnehmen ist wird zunächst in einer ersten Spritzgussform 2 ein Kern 3 mit einem ersten Polymermaterial hergestellt. Die erste Spritzgussform 2 ist mehrteilig ausgebildet, wobei in der Fig. 1A zumindest vier Segmente 2a bis 2d erkennbar sind. Als Handhabungshilfe zum Transport des Kerns 3 zwischen den Spritzgussformen ist im Endbereich ein im Querschnitt T-förmiger Stab 4 als Handhabungshilfe eingelegt. Dieser wird von dem Polymermaterial des Kerns 3 umschlossen, kann jedoch zu einem späteren Zeitpunkt durch Herausziehen in Längsrichtung zerstörungsfrei aus dem Walzenkörper 1 entnommen werden.

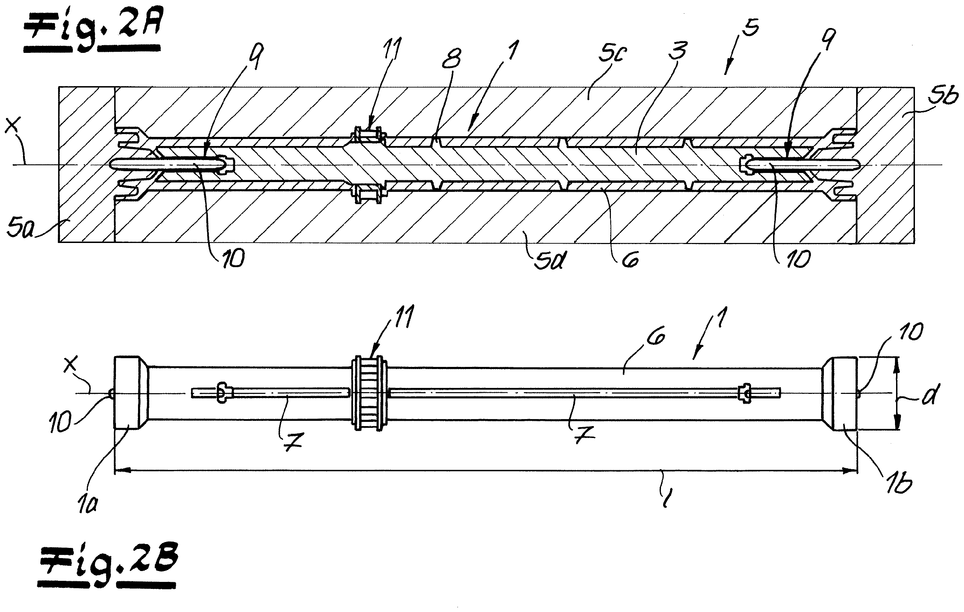

Wie der Fig. 2A zu entnehmen ist, wird der Kern 3 erfindungsgemäß anschließend in einer zweiten Spritzgussform 5 mit einem ersten Polymermaterial mit einem Mantel 6 umspritzt. Der Schnittdarstellung ist zu entnehmen, dass der Mantel 6 den Kern 3 außenseitig vollständig umschließt. Das Ergebnis dieses zweiten Spritzguss-Schrittes ist der in Fig. 2B dargestellte Walzenkörper. Dieser weist an seiner Außenseite schlitzförmige Aufnahmen 7 auf, in die nachfolgend ein Reinigungselement - insbesondere ein Borstenstreifen - eingebracht und z.B. durch Verkleben fixiert werden kann.

Um einen guten Zusammenhalt zwischen Mantel 6 und Kern 3 sowie eine gleichmäßige Masseverteilung zu gewährleisten, sind der Kern 3 und der Mantel 6 aus demselben Polymermaterial - d.h. insbesondere mit gleicher Dichte - ausgebildet. In dem dargestellten Ausführungsbeispiel macht die Masse des Mantels 6 ungefähr zwei Drittel der Masse des Kerns 3 aus.

Der Walzenkörper 1 als Ganzes (sowie der Kern 3 und der Mantel 6) sind um eine Drehachse x ausgebildet. Der Walzenkörper 1 weist dabei in Richtung der Drehachse x (Axialrichtung) eine Längserstreckung l auf, welche in etwa zehnfach größer ist als die Quererstreckung d senkrecht zu der Drehachse x. Durch eine bezüglich der Drehachse x symmetrische Ausbildung des Walzenkörpers 1 verläuft die Drehachse x durch dessen Schwerpunkt.

Wie man den Figuren 1A und 1B entnehmen kann, sind an der Außenseite 3a des Kerns 3 Formschlussanordnungen in Form von Fortsätzen 8 ausgebildet, welche in dem zweiten Spritzguss-Schritt (Fig. 2A) von dem Mantel 6 formschlüssig umgriffen werden.

Zu Lagerung des Walzenkörpers 1 bei seinem späteren Verwendungszweck - insbesondere innerhalb einer Staubsaugerdüse - werden nach dem ersten Spritzguss-Schritt in endseitige Aufnahmen 9 des Kerns 3 Lagerstifte 10 eingesetzt, welche in dem zweiten Spritzguss-Schritt vom Mantel 6 mit umgossen und dadurch innerhalb des Walzenkörpers fixiert werden.

Wie der Fig. 2B zu entnehmen ist, ist - beabstandet von den Endbereichen 1a, 1b des Walzenkörpers 1 - ein Zahnrad 11 als Antriebselement eingesetzt. Hierzu wurden in dem ersten Spritzguss-Schritt bereits Halteelemente 12 in Form von metallischen Halteplatten in den Kern 3 eingegossen. Auf diese wurde das Zahnrad 11 zwischen dem ersten Spritzguss-Schritt und dem zweiten Spritzguss-Schritt in axialer Richtung x aufgeschoben. Durch das anschließende Umspritzen mit dem Mantel 6 wird auch das Zahnrad 11 als Antriebselement verliersicher in dem Walzenkörper 1 gehalten.

## Patentansprüche

1. Verfahren zur Herstellung einer Reinigungswalze, insbesondere für ein Bodenreinigungsgerät, umfassend einen Walzenkörper (1) und eine an dem Walzenkörper (1) angeordnete Reinigungsanordnung, wobei der Walzenkörper (1) einen Kern (3) und einen um den Kern (3) angeordneten Mantel (6) aufweist, **dadurch gekennzeichnet, dass** der Walzenkörper in einem mehrstufigen Spritzgussverfahren hergestellt wird, wobei der Kern (3) in einer ersten Spritzgussform (2) mit einem ersten Polymermaterial hergestellt wird und wobei der Mantel (6) durch zumindest ein nachfolgendes Umspritzen des Kerns (3) in einer zweiten Spritzgussform mit einem zweiten Polymermaterial hergestellt wird, dass auf den Kern (3) zumindest ein Antriebselement (11) aufgesetzt wird und dass das Antriebselement (11) anschließend durch den Mantel (6) verliersicher in dem Walzenkörper gehalten wird, dass der Kern (3) zumindest ein Halteelement (12) zur drehstarren Kopplung mit dem Antriebselement (11) aufweist und dass es sich bei dem Halteelement (12) um ein materialfremdes Halteteil handelt, welches in den Kern (3) eingelegt wird.

2. Verfahren nach Anspruch 1, **dadurch gekennzeichnet, dass** die Zusammensetzung des ersten Polymermaterials zu zumindest 95 Gew.-% mit der Zusammensetzung des zweiten Polymermaterials übereinstimmt.

3. Verfahren nach Anspruch 2, **dadurch gekennzeichnet, dass** das erste Polymermaterial mit dem zweiten Polymermaterial identisch ist.

4. Verfahren nach einem der Ansprüche 1 bis 3, **dadurch gekennzeichnet, dass** das erste Polymermaterial dieselbe Dichte aufweist wie das zweite Polymermaterial.

5. Verfahren nach einem der Ansprüche 1 bis 4, **dadurch gekennzeichnet, dass** der Kern (3) vor dem Umspritzen mit dem zweiten Polymermaterial zumindest eine Abkühlphase durchläuft.

6. Verfahren nach einem der Ansprüche 1 bis 5, **dadurch gekennzeichnet, dass** das erste Polymermaterial und das zweite Polymermaterial in einem Massenverhältnis zwischen 1 : 2 und 2 : 1 stehen.

7. Verfahren nach einem der Ansprüche 1 bis 6, **dadurch gekennzeichnet, dass** der Walzenkörper (1) um eine Drehachse (x) ausgebildet ist und dass der Walzenkörper (1) in Richtung der Drehachse (x) eine größere, insbesondere zumindest fünffach größere, Längserstreckung (l) aufweist als in radialer Richtung senkrecht zu der Drehachse.

8. Verfahren nach Anspruch 7, **dadurch gekennzeichnet, dass** die Drehachse (x) durch den Schwerpunkt des Walzenkörpers (1) verläuft.

9. Verfahren nach einem der Ansprüche 7 oder 8, **dadurch gekennzeichnet, dass** der Walzenkörper (1) einen maximalen Durchmesser (d) zwischen 1,5 cm und 4 cm aufweist.

10. Verfahren nach einem der Ansprüche 7 bis 9, **dadurch gekennzeichnet, dass** der Walzenkörper (1) eine in der Axialrichtung (x) gemessene Länge (l) zwischen 20 cm und 35 cm aufweist.

11. Verfahren nach einem der Ansprüche 1 bis 10, **dadurch gekennzeichnet, dass** Reinigungselemente der Reinigungsanordnung, insbesondere Borsten oder Borstenbüschel, in den Mantel (6) formschlüssig eingegossen werden.

12. Verfahren nach einem der Ansprüche 1 bis 11, **dadurch gekennzeichnet, dass** der Kern (3) eine Außenseite (3c) und zumindest eine an der Außenseite ausgebildete Formschlussanordnung (8) aufweist, in welche der Mantel (6) formschlüssig eingreift.

13. Verfahren nach einem der Ansprüche 1 bis 12, **dadurch gekennzeichnet, dass** in den Walzenkörper (1) zumindest eine Funktionseinheit, insbesondere ein Wälzlager, verliersicher eingegossen wird.

14. Verfahren nach einem der Ansprüche 1 bis 13, **dadurch gekennzeichnet, dass** in dem Kern (3) zumindest eine in der Axialrichtung (x) zugängliche Aufnahme ausgebildet ist, welche von dem Mantel (6) ausgekleidet wird.

15. Reinigungswalze, insbesondere für eine Staubsaugerbodendüse, erhältlich nach einem Verfahren gemäß den Ansprüchen 1 bis 14, umfassend einen Walzenkörper (1) und eine an dem Walzenkörper angeordnete Reinigungsanordnung, wobei der Walzenkörper einen Kern (3) mit einem ersten Polymermaterial und einen den Kern unmittelbar umgebenden Mantel (6) mit einem zweiten, insbesondere identischen, Polymermaterial aufweist, **dadurch gekennzeichnet, dass** auf den Kern (3) zumindest ein Antriebselement (11) aufgesetzt ist, welches durch den Mantel (6) verliersicher in dem Walzenkörper gehalten wird, dass der Kern (3) zumindest ein Halteelement (12) zur drehstarren Kopplung mit dem Antriebselement (11) aufweist und dass es sich bei dem Halteelement (12) um ein materialfremdes Halteteil handelt, welches in den Kern (3) eingelegt ist.

16. Staubsaugerdüse **gekennzeichnet durch** zumindest eine Reinigungswalze (1) gemäß Anspruch 15.

## Claims

1. A method for producing a cleaning roller, in particular for floor cleaning equipment, comprising a roller body (1) and a cleaning assembly arranged on the roller body (1), wherein the roller body (1) has a core (3) and a jacket (6) arranged around the core (3), **characterized in that** the roller body is produced in a multi-stage injection molding process, wherein the core (3) is produced in a first injection mold (2) with a first polymeric material and wherein the jacket (6) is produced by means of at least a subsequent overmolding of the core (3) in a second injection mold with a second polymeric material, that at least one drive element (11) is attached to the core (3) and that the drive element (11) is subsequently captively held in the roller body by means of the jacket (6), that the core (3) has at least one holding element (12) for the rotationally rigid coupling to the drive element (11) and that the holding element (12) is a holding part of a different material, which is placed into the core (3) .

2. The method according to claim 1, **characterized in that** at least 95 % by weight of the composition of the first polymeric material corresponds to the composition of the second polymeric material.

3. The method according to claim 2, **characterized in that** the first polymeric material is identical to the second polymeric material.

4. The method according to one of claims 1 to 3, **characterized in that** the first polymeric material has the same density as the second polymeric material.

5. The method according to one of claims 1 to 4, **characterized in that** the core (3) passes through at least one cool-down phase prior to the overmolding with the second polymeric material.

6. The method according to one of claims 1 to 5, **characterized in that** the first polymeric material and the second polymeric material have a mass ratio of between 1 : 2 and 2 : 1.

7. The method according to one of claims 1 to 6, **characterized in that** the roller body (1) is formed around an axis of rotation (x) and that the roller body (1) has a greater, in particular five times greater, longitudinal extension (1) in the direction of the axis of rotation (x) than in the radial direction perpendicular to the axis of rotation.

8. The method according to claim 7, **characterized in that** the axis of rotation (x) runs through the center of gravity of the roller body (1).

9. The method according to one of claims 7 or 8, **characterized in that** the roller body (1) has a maximum diameter (d) of between 1.5 cm and 4 cm.

10. The method according to one of claims 7 to 9, **characterized in that** the roller body (1) has a length (1) of between 20 cm and 35 cm measured in the axial direction (x).

11. The method according to one of claims 1 to 10, **characterized in that** cleaning elements of the cleaning assembly, in particular bristles or tufts, of bristles are cast in a positive manner into the jacket (6).

12. The method according to one of claims 1 to 11, **characterized in that** the core (3) has an outer side (3c) and at least one positive locking assembly (8), which is formed on the outer side and with which the jacket (6) engages in a positive manner.

13. The method according to one of claims 1 to 12, **characterized in that** at least one functional unit, in particular a rolling bearing, is cast in a captive manner into the roller body (1).

14. The method according to one of claims 1 to 13, **characterized in that** at least one receptacle, which is accessible in the axial direction (x) and which is lined by the jacket (6), is formed in the core (3).

15. A cleaning roller, in particular for a vacuum cleaner nozzle, which can be obtained according to a method according to claims 1 to 14, comprising a roller body (1) and a cleaning assembly arranged on the roller body, wherein the roller body has a core (3) with a first polymeric material and a jacket (6) directly surrounding the core with a second, in particular identical polymeric material, **characterized in that** at least one drive element (11), which is captively held in the roller body by means of the jacket (6), is attached to the core (3), that the core (3) has at least one holding element (12) for the rotationally rigid coupling to the drive element (11) and that the holding element (12) is a holding part of a different material, which is placed into the core (3).

16. A vacuum cleaner nozzle, **characterized by** at least one cleaning roller (1) according to claim 15.

## Revendications

1. Procédé, destiné à fabriquer un rouleau de nettoyage, notamment pour un appareil de nettoyage du sol, comprenant un corps de rouleau (1) et un ensemble de nettoyage placé sur le corps de rouleau (1), le corps de rouleau (1) comprenant une âme (3) et une enveloppe (6), placée autour de l'âme (3), **caractérisé en ce que** l'on fabrique le corps de rouleau lors d'un procédé d'injection en plusieurs étapes, l'âme (3) étant fabriquée dans un premier moule d'injection (2) avec une première matière polymère et l'enveloppe (6) étant fabriquée par au moins un surmoulage suivant de l'âme (3) dans un deuxième moule d'injection avec une deuxième matière polymère, **en ce que** l'on pose sur l'âme (3) au moins un élément d'entraînement (11) et **en ce que** par l'enveloppe (6), l'on maintient ensuite l'élément d'entraînement (11) de manière imperdable dans le corps de rouleau, **en ce que** l'âme (3) comporte au moins un élément de maintien (12) pour l'accouplement rigide en rotation avec l'élément d'entraînement (11) et **en ce que** l'élément de maintien (12) est une pièce de maintien en une autre matière, que l'on insère dans l'âme (3).

2. Procédé selon la revendication 1, **caractérisé en ce que** la composition de la première matière polymère correspond à raison d'au moins 95 % en poids avec la composition de la deuxième matière polymère.

3. Procédé selon la revendication 2, **caractérisé en ce que** la première matière polymère est identique à la deuxième matière polymère.

4. Procédé selon l'une quelconque des revendications 1 à 3, **caractérisé en ce que** la première matière polymère fait preuve de la même densité que la deuxième matière polymère.

5. Procédé selon l'une quelconque des revendications 1 à 4, **caractérisé en ce qu'**avant d'être surmoulée avec la deuxième matière polymère, l'âme (3) traverse au moins une phase de refroidissement.

6. Procédé selon l'une quelconque des revendications 1 à 5, **caractérisé en ce que** la première matière polymère et la deuxième matière polymère se trouvent dans un rapport de masse compris entre 1 : 2 et 2 : 1.

7. Procédé selon l'une quelconque des revendications 1 à 6, **caractérisé en ce que** le corps de rouleau (1) est conçu autour d'un axe de rotation (x) et **en ce que** le corps de rouleau (1) présente dans la direction de l'axe de rotation (x) une extension longitudinale (1) supérieure, au moins du quintuple à celle dans la direction radiale, à la perpendiculaire de l'axe de rotation.

8. Procédé selon la revendication 7, **caractérisé en ce que** l'axe de rotation (x) s'écoule à travers le point de gravité du corps de rouleau (1) t.

9. Procédé selon l'une quelconque des revendications 7 ou 8, **caractérisé en ce que** le corps de rouleau (1) présente un diamètre (d) maximum compris entre 1,5 cm et 4 cm.

10. Procédé selon l'une quelconque des revendications 7 à 9, **caractérisé en ce que** le corps de rouleau (1) présente une longueur (1) mesurée dans la direction axiale (x) comprise entre 20 cm et 35 cm.

11. Procédé selon l'une quelconque des revendications 1 à 10, **caractérisé en ce que** l'on coule par complémentarité de forme des éléments de nettoyage de l'ensemble de nettoyage, notamment des poils ou des touffes de poils dans l'enveloppe (6).

12. Procédé selon l'une quelconque des revendications 1 à 11, **caractérisé en ce que** l'âme (3) comporte une face extérieure (3c) et au moins un ensemble (8) en complémentarité de forme conçu sur la face extérieure, dans lequel l'enveloppe (6) s'engage par complémentarité de forme.

13. Procédé selon l'une quelconque des revendications 1 à 12, **caractérisé en ce que** l'on coule de manière imperdable dans le corps de rouleau (1) au moins une unité fonctionnelle, notamment un roulement mécanique.

14. Procédé selon l'une quelconque des revendications 1 à 13, **caractérisé en ce que** dans l'âme (3) est constitué au moins un logement accessible dans la direction axiale (x), lequel est chemisé par l'enveloppe (6).

15. Rouleau de nettoyage, destiné notamment à un suceur de sol d'un aspirateur, susceptible d'être obtenu d'après un procédé selon les revendications 1 à 14, comprenant un corps de rouleau (1) et un ensemble de nettoyage placé sur le corps de rouleau, le corps de rouleau comportant une âme (3) avec une première matière polymère et une enveloppe (6) entourant directement l'âme, avec une deuxième matière polymère, notamment identique, **caractérisé en ce que** sur l'âme (3) est posé au moins un élément d'entraînement (11), lequel est maintenu de manière imperdable par l'enveloppe (6) dans le corps de rouleau, **en ce que** l'âme (3) comporte au moins un élément de maintien (12) pour l'accouplement rigide en rotation avec l'élément d'entraînement (11) et **en ce que** l'élément de maintien (12) est une pièce de maintien en une autre matière, laquelle est insérée dans l'âme (3).

16. Suceur d'aspirateur, **caractérisé par** au moins un rouleau de nettoyage (1) selon la revendication 15.
